# EUROPEAN PATENT APPLICATION

(11) **EP 0 929 201 A2**
(43) Date of publication of application: **14.07.1999**
(21) Application number: 98305902.3
(22) Date of filing: 24.07.1998
(51) Int. Cl.: H04Q 7/32

(54) **A method for inputting and transmitting messages from a portable telephone**

(30) Priority: 25.07.1997 KR 9734913
(71) Applicant: SAMSUNG ELECTRONICS CO., LTD., Suwon-City, Kyungki-do (KR)
(72) Inventor: Hwang, Yong-Duk, Kumi-Shi, Kyongangbuk-Do (KR)
(74) Representative: Tunstall, Christopher Stephen

(57) **Abstract**

A method for storing messages in predetermined sequence and then transmitting the messages. A plurality of input modes are provided, and are displayed in predetermined sequence. If a current input mode is skipped or a message input according to the current input mode is completed, a next input mode is displayed. The messages are transmitted when the skipping message input is completed for all the input modes. The input modes include "when", "where", "who", "what", "how", "why" and "the rest" input modes, and the input modes are selected in sequence.

## Description

The present invention relates to a method for transmitting messages from a portable telephone, and more particularly, to such a method for storing and then transmitting messages.

### Background of the Invention

In general, a portable telephone, such as a GSM (Global System for Mobile Communications) phone, employs a short message service (SMS) in which the user inputs messages to be stored and transmitted. After completion of the message input and storage, the portable telephone transmits the messages.

However, the messages are transmitted after the user finishes inputting all the messages (or characters), so that it takes a long time to store and transmit the messages in the conventional method. Further, in a conventional portable telephone, the messages do not have a set format, which may cause misunderstanding of the transmitted messages.

### Summary of the Invention

The present invention provides a method for transmitting messages from a portable telephone, comprising the steps of (a) selecting a scenario mode, (b) displaying a prompt corresponding to a current one of a plurality of input modes; (c) skipping the current input mode, or storing a message corresponding to the current input mode; (d) repeating steps (b) and (c) in respect the remainder of the plurality of input modes, in a predetermined sequence, and (e) after storing messages for, or skipping, all of the plurality of input modes in said predetermined sequence, transmitting the messages stored.

Preferably, the plurality of input modes comprises one or more of "when", "where", "who", "what", "how", "why" and "the rest" input modes.

Preferably, the plurality of input modes are selected in the predetermined sequence of "when", "where", "who", "what", "how", "why" and "the rest" input modes.

Preferably, the method comprises, for each of the plurality of input modes, the steps of entering the input mode; and skipping the input mode, or storing a message according to an input by a user.

Preferably, the method according further comprises the steps of (f) receiving the messages transmitted from the portable telephone, at a receiving terminal; (g) for each of the plurality of input modes, according to the presence or absence of a one of the messages corresponding to the input mode, either: skipping the input mode; or displaying a header corresponding to the input mode and displaying the one of the messages corresponding to the input mode.

Preferably, the step (g) is performed in respect of the plurality of input modes, in a predetermined sequence corresponding to the predetermined sequence of step (d).

Preferably, a plurality of input modes are displayed in a predetermined sequence, if a scenario mode is selected. If a current input mode is skipped or a message input according to the current input mode is completed, a next input mode is displayed. The messages input are transmitted, when the message input is completed for all the input modes in predetermined sequence.

Preferably, the present invention provides a method for inputting messages according to a predetermined scenario and then transmitting the messages.

Preferably, the present invention provides a method for inputting messages according to set modes and then transmitting the messages.

Preferably, the present invention provides a method for inputting messages in predetermined sequence and then transmitting the messages.

The present invention also provides a portable telephone for transmitting messages, comprising (A) selecting means for selecting a scenario mode, (B) display means for displaying a prompt corresponding to each of a plurality of input modes, (C) input means for skipping, or storing a message corresponding to, each input mode, and (D) transmission means for transmitting the messages stored.

The present invention also provides a receiving terminal for receiving messages, comprising (E) receiving means for receiving transmitted messages, (F) detecting means for detecting the use of a scenario mode, (G) means for selecting a current input mode from a plurality of input modes, (H) control means for skipping the current input mode in the absence of a message corresponding to a current input mode, and (J) display means for displaying a header corresponding to the current input mode and a one of the messages corresponding to the current input mode, in the presence of a one of the messages corresponding to the current input mode.

The present invention also provides a system for transmitting and receiving messages, comprising a portable telephone as described, and a receiving terminal as described.

### Brief Description of the Drawings

Certain embodiments of the present invention will now be described, by way of examples only, with reference to the accompanying drawings in which:
FIG. 1 is a schematic block diagram of a portable telephone to which the present invention may be applied; and
FIG. 2 is a flow chart for inputting and storing messages and then transmitting the messages, according to an embodiment of the present invention.

### Detailed Description of the Drawings

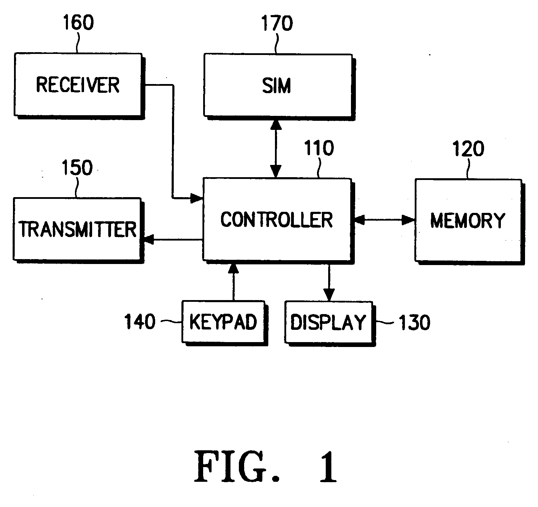

FIG. 1 is a block diagram of a portable telephone to which the present invention may be applied. As illustrated, the portable telephone consists of a controller 110, a memory 120, a display 130, a keypad 140, a transmitter 150, a receiver 160 and a SIM (Subscriber Identity Module) 170.

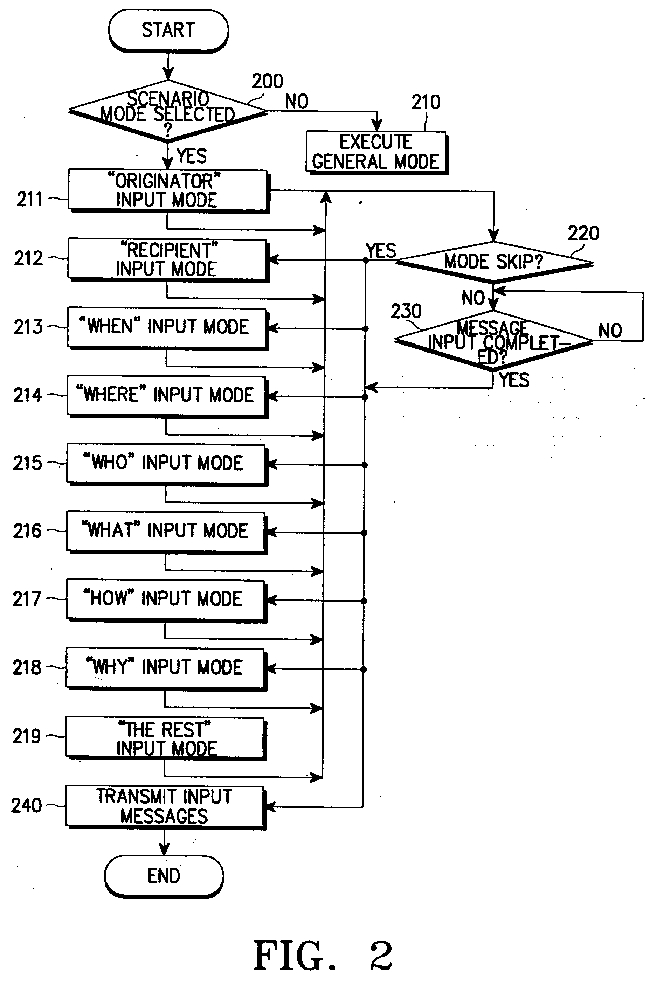

FIG. 2 is a flow chart for inputting and storing messages in a predetermined sequence and then transmitting the messages from the portable telephone of FIG. 1, according to an embodiment of the present invention.

With reference to FIGs 1 and 2, a detailed description will be given of how the portable telephone stores messages in predetermined sequence and then transmits the messages. In an embodiment of the invention, messages are input according to a "5-WH and 1-H" (when, where, who, what, how, why) rule.

In step 200 of FIG. 2, the controller 110 searches key data input from the keypad 140 to determine whether a scenario mode according to the present invention is selected.

If the scenario mode is not selected, the controller 110 executes a control operation according to a general input mode in step 210. The general input mode is an input mode where the user inputs message characters at random, as desired by the user.

On the contrary, if the scenario mode of the present invention is selected, the controller 110 outputs to the display 130 a message indicating entry into a first "originator (or originating party)" input mode in step 211. The display 130 displays an appropriate prompt.

In step 220, the controller 110 receives key data input from the keypad 140 to determine whether to skip the "originator" input mode. An input mode may be skipped by an appropriate input to key pad 140. If the "originator" input mode is not skipped, an "originator" message is input, and stored in the memory 120. The controller 110 checks in step 230 whether a message input according to the "originator" input mode is completed by detecting an end key data input from the keypad 140.

When the "originator" input mode is skipped or the message input according to the "originator" input mode is completed, the controller 110 outputs in step 212 a message indicating the entry into a following "recipient" (or "terminating party") input mode to the display 130. The display 130 displays an appropriate prompt.

In step 220, the controller 110 determines whether or not to skip the "recipient" input mode according to input key data from the keypad 140. If the "recipient" input mode is not skipped, a message is input and stored in the memory 120. The controller 110 checks in step 230 whether the message input in the "recipient" input mode is completed, by detecting an end key data input from the keypad 140.

When the "recipient" input mode is skipped or the message input according to the "recipient" input mode is completed, the controller 110 outputs in step 213 a message informing the entry into a following "when" input mode to the display 130. The display 130 displays an appropriate prompt.

In step 220, the controller 110 determines whether or not to skip the "when" input mode according to input key data from the keypad 140. If the "when" input mode is not skipped, a message is input and stored in the memory 120. The controller 110 checks in step 230 whether the message input according to the "when" input mode is completed by detecting an end key data input from the keypad 140.

When the "when" input mode is skipped or the message input according to the "when" input mode is completed, the controller 110 outputs in step 214 a message informing the entry into a following "where" input mode to the display 130. The display 130 displays an appropriate prompt.

In step 220, the controller 110 determines whether or not to skip the "where" input mode upon inputting the key data from the keypad 140. If the "where" input mode is not skipped, a message is input and stored in the memory 120. The controller 110 checks in step 230 whether the message input according to the "where" input mode is completed by detecting an end key data input from the keypad 140.

When the "where" input mode is skipped or the message input according to the "where" input mode is completed, the controller 110 outputs in step 215 a message indicating the entry into a following "who" input mode to the display 130. The display 130 displays an appropriate prompt.

In step 220, the controller 110 determines whether or not to skip the "who" input mode according to input key data from the keypad 140. If the "who" input mode is not skipped, a message is input and stored in the memory 120. The controller 110 checks in step 230 whether the message input according to the "who" input mode is completed by detecting an end key data input from the keypad 140.

When the "who" input mode is skipped or the message input according to the "who" input mode is completed, the controller 110 outputs in step 216 a message indicating the entry into a following "what" input mode to the display 130. The display 130 displays an appropriate prompt.

In step 220, the controller 110 determines whether or not to skip the "what" input mode according to input key data from the keypad 140. If the "what" input mode is not skipped, a message is input and stored in the memory 120. The controller 110 checks in step 230 if the message input according to the "what" input mode is completed by detecting an end key data input from the keypad 140.

When the "what" input mode is skipped or the message input according to the "what" input mode is completed, the controller 110 outputs in step 217 a message indicating the entry into a following "how" input mode to the display 130. The display 130 displays an appropriate prompt.

In step 220, the controller 110 determines whether or not to skip the "how" input mode according to input key data from the keypad 140. If the "how" input mode is not skipped, a message is input and stored in the memory 120. The controller 110 checks in step 230 whether the message input according to the "how" input mode is completed by detecting an end key data input from the keypad 140.

When the "how" input mode is skipped or the message input according to the "how" input mode is completed, the controller 110 outputs in step 218 a message indicating the entry into a following "why" input mode to the display 130. The display 130 displays an appropriate prompt.

In step 220, the controller 110 determines whether or not to skip the "why" input mode according to key data input from the keypad 140. If the "why" input mode is not skipped, a message is input and stored in the memory 120. The controller 110 checks in step 230 whether the message input according to the "why" input mode is completed by detecting an end data key input from the keypad 140.

When the "why" input mode is skipped or the message input according to the "why" input mode is completed, the controller 110 outputs in step 219 a message indicating the entry into a following "the rest" input mode to the display 130. The display 130 displays an appropriate prompt.

In step 220, the controller 110 determines whether or not to skip the input mode according to key data from the keypad 140. If the "the rest" input mode is not skipped, a message is input and stored in the memory 120. The controller 110 checks in step 230 whether the message input according to the "the rest" input mode is completed by detecting an end key data input from the keypad 140.

When the "the rest" input mode is skipped or the message input according to the "the rest" input mode is completed, the controller 110 transmits the messages which have been input and stored according to the scenario mode of the present invention, in step 240.

As described above, the portable telephone of the present invention stores messages to be transmitted in a predetermined sequence, enabling a clear message transmission. The fixed sequence is known to a receiving terminal, and/or to its user. The transmitted messages are preferably displayed by the receiving terminal to be read in a fixed sequence, such as "from:" (originator); "to:" (recipient) ; "when"; "where"; "who"; "what"; "how"; "why"; (and other information). The context of the message is therefore rendered clear and unambiguous. As words like "when", "where" do not need to be keyed in, operation of the message transmission method and apparatus of the present invention is rendered faster, simpler and more effective, for originator and recipient alike.

According to an aspect of the invention, a receiving terminal is provided, for receiving messages from the portable telephone. A receiving terminal according to an embodiment of this aspect of the present invention comprises a receiver or other receiving means for receiving transmitted messages; control means to enable the skipping of a current input mode in the absence of a message corresponding to the current input mode; and a display for displaying a header corresponding to the input mode and a one of the messages corresponding to the input mode, in the presence of a one of the messages corresponding to the current input mode. In the receiving terminal, each of the modes causes an appropriate header, such as "WHO:" to be displayed, along with the transmitted message corresponding to that header.

According to a further aspect of the invention, there is provided a system for transmitting and receiving messages, comprising a portable telephone as described and a receiving terminal as described.

While this invention has been described in connection with a certain embodiments thereof, it is to be understood that various modifications and variations may be made within the and scope of the invention as defined in the appended claims. For example, the method and apparatus of the present invention may be adapted to provide other modes than "when", "where" etc. and the modes may be provided in any suitable number. Although described with particular reference to portable telephones, the method and apparatus of the present invention may be simply adapted for use with other message services, such as pagers, Personal Digital Assistants (PDAs), and so on. In such devices, the input keys are often difficult to operate, and the method and apparatus of the present invention provides for clear, fast composition and transmission of messages while requiring a minimum number of keystrokes.

## Claims

1. A method for transmitting messages, comprising the steps of:
a) selecting a scenario mode (200);
b) displaying a prompt corresponding to a current one of a plurality of input modes;
c) skipping (220) the current input mode, or storing a message corresponding to the current input mode;
d) repeating steps (b) and (c) in respect the remainder of the plurality of input modes, in a predetermined sequence; and
e) after storing messages for, or skipping, all of the plurality of input modes in said predetermined sequence, transmitting (240) the messages stored.

2. A method as claimed in claim 1, wherein said plurality of input modes comprises one or more of "when", "where", "who", "what", "how", "why" and "the rest" input modes.

3. A method according to claim 2 wherein said plurality of input modes are selected in the predetermined sequence of "when", "where", "who", "what", "how", "why" and "the rest" input modes.

4. A method according to any preceding claim comprising, for each of the plurality of input modes, the steps of:
- entering the input mode (211); and
- skipping the input mode (220), or storing a message (230), according to an input by a user.

5. A method according to any preceding claim, further comprising the steps of:
f) receiving the messages transmitted from the portable telephone, at a receiving terminal;
g) for each of the plurality of input modes, according to the presence or absence of a one of the messages corresponding to the input mode, either:
- skipping the input mode; or
- displaying a header corresponding to the input mode; and
- displaying the one of the messages corresponding to the input mode.

6. A method according to claim 5 wherein the step (g) is performed in respect of the plurality of input modes, in a predetermined sequence corresponding to the predetermined sequence of step (d).

7. A portable telephone for transmitting messages, comprising:
A) selecting means (140, 110) for selecting a scenario mode;
B) display means (130) for displaying a prompt corresponding to each of a plurality of input modes;
C) input means (140) for skipping, or storing a message corresponding to, each input mode; and
D) transmission means (150) for transmitting the messages stored.

8. A receiving terminal for receiving messages, comprising:
E) receiving means for receiving transmitted messages;
F) detecting means for detecting the use of a scenario mode;
G) means for selecting a current input from a plurality of input modes;
H) control means for skipping an input mode in the absence of a message corresponding to the current input mode; and
J) display means for displaying a header corresponding to the current input mode and a one of the messages corresponding to the current input mode, in the presence of a one of the messages corresponding to the current input mode.

9. A system for transmitting and receiving messages, comprising:
- a portable telephone according to claim 7; and
- a receiving terminal according to claim 8.
